# EUROPEAN PATENT APPLICATION

(11) **EP 3 978 090 A1**
(43) Date of publication of application: **06.04.2022**
(21) Application number: 20814624.1
(22) Date of filing: 28.05.2020
(51) Int. Cl.: A63F 13/69, A63F 13/822, A63F 13/35, A63F 13/55, A63F 13/85

(54) **METHOD FOR PROVIDING BATTLE ROYALE GAME USING SUPPLY BOX INSERTED AT RANDOM TIME, AND SERVER USING SAME**

(30) Priority: 31.05.2019 KR 20190064916
(71) Applicant: Wonder People Co., Ltd., Seoul 06174 (KR)
(72) Inventor: HUR, Min, Seoul 06082 (KR)
(74) Representative: V.O.
(86) International application number: PCT/KR2020/006898
(87) International publication number: WO 2020/242214

(57) **Abstract**

The present invention enables a player to select an item to be used in a game, can generate a supply box including the item, can insert the supply box for the player at a random time and transmit a notification including insertion position information about the supply box through a predetermined wireless tool, and enables predetermined game money possessed by the player to be paid as a transmission fee for the supply box when the supply box is obtained by the player.

## Description

This application claims the benefit of priority to Korean Non-Provisional Patent Application No. 10-2019-0064916 filed on May 31, 2019, the entire contents of which being incorporated herein by reference.

The present disclosure relates to a method for providing a battle royale game in which supply boxes are provided at a random time and a server using the same; and more particularly, to the method for providing the battle royal game where a plurality of game players compete for survival in a specific area, where a first state of the battle royale game represents a state in which the game players log into the battle royale game but do not play the battle royale game and where a second state of the battle royale game represents a state in which the game players play the battle royale game, including steps of: a game server performing one of a process of allowing a specific player in the first state among the game players to select one or more specific items among one or more personal items owned by the specific player and one or more shared items and a process of allowing the specific items to be selected by using a first algorithm; if information on the specific items is acquired, the game server performing a process of generating a specific supply box, corresponding to the specific player, which includes the specific items; and if the specific player enters the second state, the game server performing a process of providing the specific supply box by referring to information on a location of an avatar of the specific player on a specific map, at a specific time determined randomly by using a second algorithm, and a process of allowing the specific player to play the battle royal game by using the specific supply box that is provided.

Recently, a lot of battle royale games in which a large number of game players can play at the same time have been released and the battle royale games are growing rapidly as they are steadily gaining popularity among users. In particular, a battle royale game such as PlayerUnknown's Battlegrounds is steadily gaining popularity.

The battle royale game is basically a game in which a large number of the game players compete with one another in a limited space to determine the final winner. And its continued popularity among the game players is attributed to pleasure in seizing a given terrain and items and establishing a strategy to overwhelm other game players.

However, rather than simply acquiring a supply box containing a given item (referred to as 'farming'), obtaining the supply box containing the item selected directly by the game players will be of greater interest to the game players when establishing a strategy for playing the battle royale game.

Accordingly, the inventor of the present disclosure proposes a method for providing an advanced battle royale game and a server using the same.

It is an object of the present disclosure to solve all the aforementioned problems.

It is another object of the present disclosure to allow a game player to select an item for use in a battle royale game and to generate a supply box containing the selected item therein.

It is still another object of the present disclosure to provide the supply box to the game player at a random time and to transmit a notification which includes information on a specific location of the supply box to be provided, through a radio communication tool.

It is still another object of the present disclosure to allow a certain amount of in-game currency, owned by the game player, to be paid as a transmission fee of the supply box when the supply box is acquired by the game player.

In order to accomplish objects above and characteristic effects to be described later of the present disclosure, distinctive configurations of the present disclosure are described as follows.

In accordance with one aspect of the present disclosure, there is provided a method for providing a battle royale game in which supply boxes are provided at a random time, wherein the battle royale game is a game in which a plurality of game players compete for survival in a specific area, wherein a first state of the battle royale game represents a state in which the game players log into the battle royale game but do not play the battle royale game and wherein a second state of the battle royale game represents a state in which the game players play the battle royale game, including steps of: (a) a game server performing one of (i) a process of allowing a specific player in the first state among the game players to select one or more specific items among (i-1) one or more personal items owned by the specific player and (i-2) one or more shared items and (ii) a process of allowing the specific items to be selected by using a first algorithm; (b) if information on the specific items is acquired, the game server performing a process of generating a specific supply box, corresponding to the specific player, which includes the specific items; and (c) if the specific player enters the second state, the game server performing a process of providing the specific supply box by referring to information on a location of an avatar of the specific player on a specific map, at a specific time determined randomly by using a second algorithm, and a process of allowing the specific player to play the battle royal game by using the specific supply box that is provided.

In accordance with another aspect of the present disclosure, there is provided a game server for providing a battle royale game in which supply boxes are provided at a random time, wherein the battle royale game is a game in which a plurality of game players compete for survival in a specific area, wherein a first state of the battle royale game represents a state in which the game players log into the battle royale game but do not play the battle royale game and wherein a second state of the battle royale game represents a state in which the game players play the battle royale game, including: a communication part; and a processor for performing (I) one of (i) a process of allowing a specific player in the first state among the game players to select one or more specific items among (i-1) one or more personal items owned by the specific player and (i-2) one or more shared items and (ii) a process of allowing the specific items to be selected by using a first algorithm, (II) if information on the specific items is acquired, a process of generating a specific supply box, corresponding to the specific player, which includes the specific items, and (III) if the specific player enters the second state, a process of providing the specific supply box by referring to information on a location of an avatar of the specific player on a specific map, at a specific time determined randomly by using a second algorithm, and a process of allowing the specific player to play the battle royal game by using the specific supply box that is provided.
Fig. 1 is a drawing schematically illustrating a configuration system of a game server in accordance with one example embodiment of the present disclosure.
Fig. 2 is a drawing schematically illustrating processes of providing a specific supply box to a specific player at a random time in accordance with one example embodiment of the present disclosure.
Fig. 3 is a drawing schematically illustrating processes of determining information on a specific location of the specific supply box to be provided on a specific map in accordance with one example embodiment of the present disclosure.
Fig. 4 is a drawing schematically illustrating processes of transmitting a notification, which includes information on the specific location of the specific supply box to be provided on the specific map, to the specific player through the radio communication tool.

In the following detailed description, reference is made to the accompanying drawings that show, by way of illustration, specific embodiments in which the disclosure may be practiced. These embodiments are described in sufficient detail to enable those skilled in the art to practice the disclosure. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be understood that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar components throughout the several aspects.

To allow those skilled in the art to the present disclosure to be carried out easily, the example embodiments of the present disclosure by referring to attached diagrams will be explained in detail as shown below.

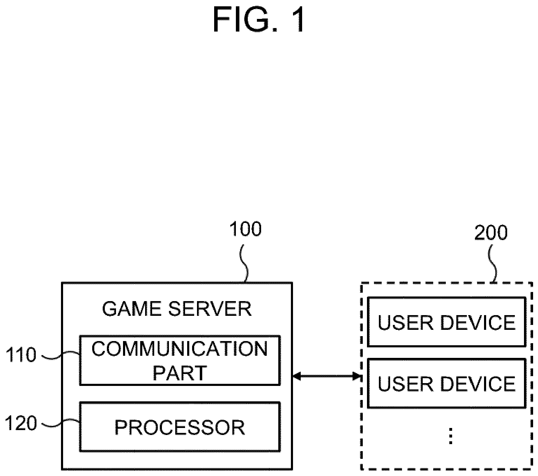

Fig. 1 is a drawing schematically illustrating a whole configuration system of a game server in accordance with one example embodiment of the present disclosure.

Referring to Fig. 1, a configuration system of the present disclosure may include a game server 100 and a plurality of user devices 200.

First of all, the game server 100 of the present disclosure may provide a battle royal game to the game players and operate the game.

The battle royale game is a game programmed to allow a plurality of the game players to compete for survival in a specific area. The game players must eliminate all other opponents, with the winner being the last player or team alive. Also, the battle royale game may be programmed to be over when a quest is determined as completed by the specific player.

Herein, a first state of the battle royale game may represent a state in which a specific player logs in but does not play the battle royale game and a second state of the battle royale game may represent a state in which the specific player plays the battle royale game. That is, the first state may represent the state in which the specific player logs into the battle royale game by inputting an ID and a password but does not proceed with the battle royale game yet, and the second state may represent the state in which the specific player plays the battle royale game using his/her own specific avatar.

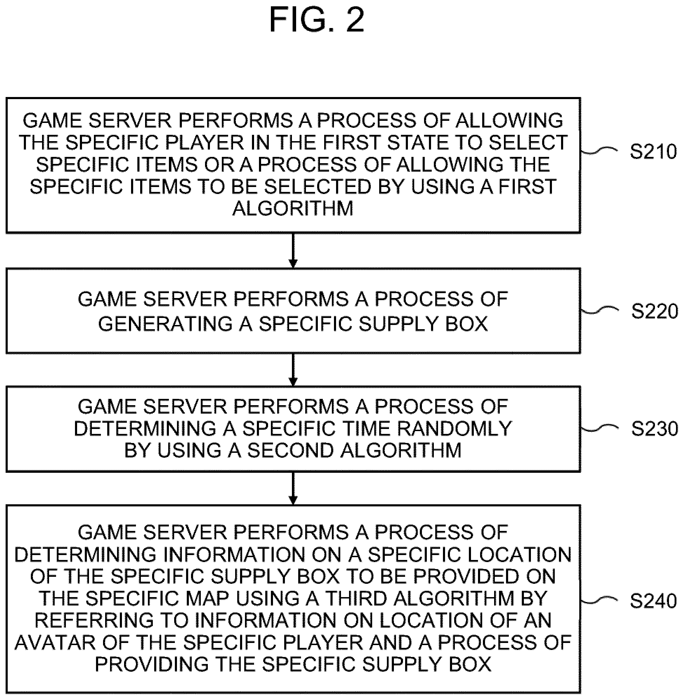

Meanwhile, the game server 100 of the present disclosure may include a communication part 110 and a processor 120, and functions of the communication part 110 and the processor 120 will be described later with reference to Fig. 2.

Next, a user device 200 in accordance with one example embodiment of the present disclosure may be a digital device capable of connecting and communicating with the game server 100. And the user device 200 may include any digital device with the processor capable of computation and having a memory, such as a desktop computer, a notebook computer, a workstation, a PDA, a web pad, a mobile phone, etc. Especially, the user device 200 may include a battle royale game related program.

Fig. 2 is a drawing schematically illustrating processes of providing a specific supply box to the specific player at a random time in accordance with one example embodiment of the present disclosure.

First, the communication part 110 of the game server 100 may communicate information with the user devices 200 and may be implemented by various communication technologies.

That is, WIFI, WCDMA (Wideband CDMA), HSDPA (High Speed Downlink Packet Access), HSUPA (High Speed Uplink Packet Access), HSPA (High Speed Packet Access), Mobile WiMAX, WiBro, LTE (Long Term Evolution), Bluetooth, IrDA (Infrared Data Association), NFC (Near Field Communication), Zigbee or wireless LAN may be used. Further, if a service is provided over the Internet, then TCP/IP, which is a set of standard protocols for transmission of information on the Internet, may be adopted.

Next, the processor 120 of the game server 100 may perform one of (i) a process of allowing the specific player in the first state to select one or more specific items among (i-1) one or more personal items owned by the specific player and (i-2) one or more shared items,_through the communication part 110 and (ii) a process of allowing the specific items to be selected by using a first algorithm, at a step of S210.

Herein, the personal items owned by the specific player may include at least one of (i) an item acquired by the specific player using in-game currency, (ii) an item acquired by the specific player in the second state, and (iii) an item acquired as a reward by completing a quest in the battle royale game.

That is, the specific player may directly purchase or acquire items, and the items personally stored in item storage may be referred to as the personal items.

The shared items may be basic items which the game server 100 provides to the game players by default.

Also, items such as the personal items and the shared items used in the battle royale game may include combat uniforms, medicine, weapons such as guns, knives, ammunition, etc. The items used in the battle royale game may further include various objects such as motorcycles, parachutes, drones, communication devices, etc.

That is, the specific player may select the specific item (e.g., an M4 carbine, a knife, a bulletproof vest, etc.) among (i) items owned by the specific player (e.g., the personal items), (ii) basic items which the game server 100 provides to the game player by default (e.g., the shared items). As another example, the processor 120 may select the specific item using the first algorithm and accordingly provide the specific player with the specific item. Herein, the first algorithm may be implemented by a randomization algorithm or may be implemented by other algorithms.

Next, if information on the specific item is acquired, the processor 120 may perform a process of generating a specific supply box, corresponding to the specific player, which contains the specific item therein, at a step of S220. Herein, information on a transmission fee of the specific supply box may be provided and the processes of providing the transmission fee will be described later.

Next, if the specific player is detected as having entered the second state, the processor 120 may perform a process of determining a specific time randomly by using a second algorithm at a step of S230, a process of providing the specific supply box by referring to information on location of an avatar 300 of the specific player on a specific map at a step of S240, and a process of allowing the specific player to play the battle royal game by using the specific supply box.

Specifically, the second algorithm may be implemented by a randomization algorithm or may be implemented by other algorithms.

Herein, the reason for determining the specific time randomly is because, if the specific player is provided with the specific supply box at a particular time or not at a designated time, the game players who is not willing to use the supply box or who cannot be provided with the supply box (e.g., those of whom with in-game currency running short or those of whom categorized as non-paying users) may be at a disadvantage while playing the game.

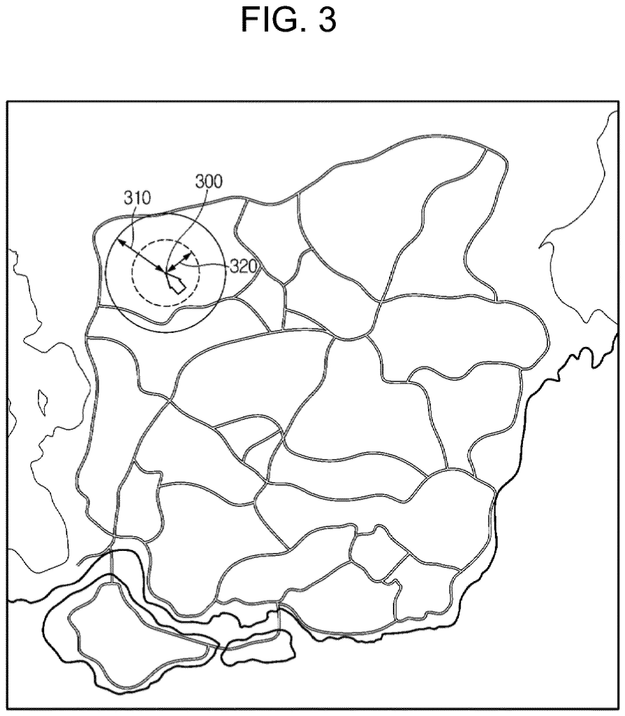

Next, processes of determining information on a specific location of the specific supply box to be provided on the specific map will be described by referring to Fig. 3.

Fig. 3 is a drawing schematically illustrating processes of determining information on the specific location of the specific supply box 330 to be provided on a specific map in accordance with one example embodiment of the present disclosure.

First, the processor 120 may acquire metadata of the information on the location of an avatar 300. The metadata of the information on the location of the avatar 300 may include coordinates of the avatar at the specific time at which the specific supply box is to be provided or coordinates of the avatar at a certain time prior to the specific time at which the specific supply box is to be provided.

Next, by referring to the metadata, the processor 120 may perform a process of determining information on the specific location of the specific supply box 330 to be provided on the specific map as specific coordinates which represent one of (i) first coordinates corresponding to the location of the avatar 300 and (ii) second coordinates, within a specific distance 310 or 320 from the location of the avatar 300, determined using a third algorithm.

For reference, the second coordinates may be determined to be within an internal area of the circle specified by the specific distance 310 or 320, whose center lies on the location of the avatar 300, but the shape of the internal area specified by the specific distance 310 or 320 is not limited to the circle. Herein, the third algorithm may be implemented by a randomization algorithm or may be implemented by other algorithms.

Meanwhile, the processor 120 may allow the specific player to adjust the specific distance 310 or 320, if the game server detects at least one of (i) a case where the specific player uses in-game currency, (ii) a case where the specific player uses a certain item owned by the specific player, and (iii) a case where the specific player uses a certain qualification earned by completing a quest in the battle royale game.

For example, assuming that a first distance 310 is larger than a second distance 320, the specific supply box may be provided within the first distance 310 and then if the specific player uses the in-game currency or a distance-adjusting item, the specific supply box will be provided within the second distance 320.

As another example, the processor 120 may perform a process of assigning a probability of the specific supply box being provided to a location farther from the location of the avatar 300 to be higher. The purpose of this is to allow more of variables to be introduced en route to the specific supply box by assigning a probability of the specific supply box being provided to a location farther from the location of the avatar 300 to be higher.

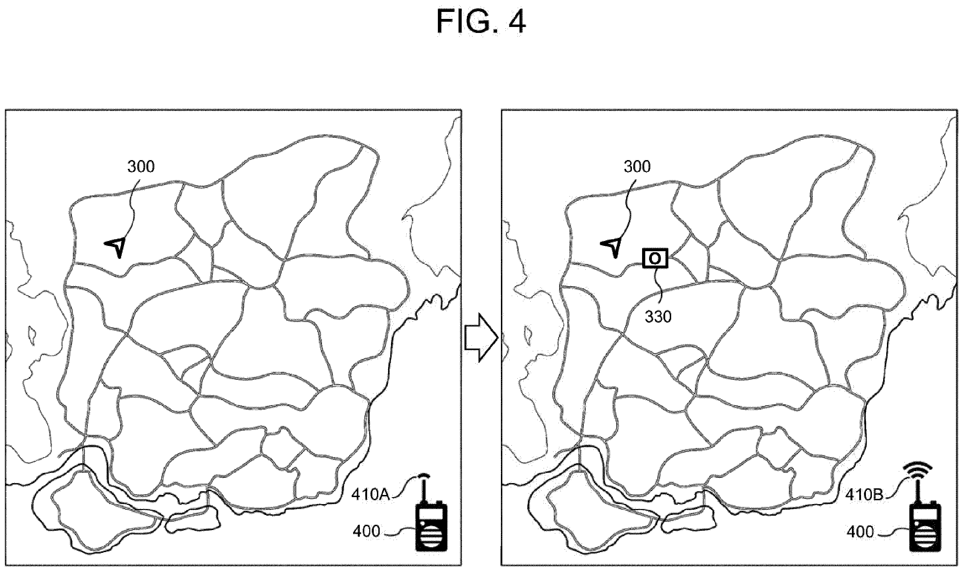

Fig. 4 is a drawing schematically illustrating process of transmitting a notification which includes information on the specific location of the specific supply box to be provided on a specific map to the specific player through the radio communication tool 400.

Specifically, if the specific supply box is determined to be provided to the specific player, the processor 120 may perform a process of providing a radio communication tool 400 to the specific player.

For example, if the specific supply box is generated after the specific player selects the specific item to be included in the specific supply box in the first state, the processor 120 may perform a process of allowing the specific player to choose whether to deliver the supply box to a battlefield where the game is to be played or not.

Herein, if the specific player selects to deliver the supply box, the processor 120 may determine that it is decided to provide the specific supply box and perform a process of providing a radio communication tool 400 to the specific player.

Herein, a radio communication tool 400 may be provided to the specific player right after the specific player selects to deliver the supply box or right at the moment the specific players enter the second state.

Next, if the specific supply box is provided at the specific time, the processor 120 may perform a process of transmitting a first notification which includes information on the specific location of the specific supply box 330 to be provided on the specific map to the specific player through the radio communication tool 400.

For example, the specific location of the specific supply box 330 to be provided on a specific map as illustrated in Fig. 4 or on a mini-map of the battlefield in which the avatar of the game player moves around can be highlighted as the first notification. Or, a graphic object related to the radio communication tool 400 on a screen on which the battlefield is displayed can be highlighted with a sound alarm or vibration alarm, and a certain message box may pop up as the first notification in order to inform that the specific supply box is provided.

Also, the processor 120 may perform a process of displaying a reception sensitivity 410A of the graphic object related to the radio communication tool 400 as smaller than a predetermined degree of sensitivity before the specific time, and after the specific time, the processor 120 may perform a process of displaying the reception sensitivity 410B of the graphic object related to the radio communication tool 400 as greater than the predetermined degree of sensitivity.

Specifically, referring to Fig. 4, before the specific time, the processor 120 may display the reception sensitivity 410A of the graphic object related to the radio communication tool 400 as extremely low as illustrated on the left, or as 0. And after the specific time, the processor 120 may display the reception sensitivity 410B of the graphic object related to the radio communication tool 400 as greater as illustrated on the right, or as FULL.

In another example embodiment, before the specific time, the processor 120 may not display the graphic object related to the radio communication tool 400, and after the specific time, the processor 120 may perform a process of displaying the graphic object related to the radio communication tool 400.

As described above, by transmitting the alarms through the radio communication tool 400 or by changing the ways of displaying the graphic object related to the radio communication tool 400, following situation can be expected. That is, the processor 120 of the game server 100 provides the specific supply box at the specific time when the specific player selects in the first state, but the specific player may not notice that the specific supply box has been delivered due to the low reception sensitivity of the radio communication tool 400 as illustrated in 410A. And, after the reception sensitivity has been improved as illustrated in 410B, the specific player may be able to suddenly notice that the specific supply box is provided and be informed with the location of the specific supply box.

In another example embodiment, in case the specific supply box is provided at the specific time when the specific player selects in the first state, the specific player may be informed with the location of the specific supply box through the radio communication tool 400 after the specific supply box is delivered near the location of the avatar 300 of the specific player.

Meanwhile, the specific supply box may be visible to another player.

Herein, if the specific supply box appears to be visible to said another player hiding in the surroundings on the battlefield or moving at the specific time, the game server 100 may allow said another player to be informed that the specific player is nearby and that the specific player may approach to seek for the specific supply box. The purpose of this is to allow more of variables to be introduced while playing the game.

Next, in case that the specific supply box is being attacked by another player, the processor 120 performs a process of transmitting a second notification which includes information that the specific supply box is being attacked by said another player.

For example, a certain message box indicating that the specific supply box is being attacked by said another player may pop up and the radio communication tool 400 may be highlighted, or a graphic object illustrating HP (Hit Point) may pop up indicating that the HP is being reduced by attacks in real-time.

Next, the processor 120 may perform a process of allowing the specific player to provide a function of a closed-circuit television (CCTV) capable of monitoring nearby area of the specific supply box, if it detects at least one of (i) a case where the specific player uses in-game currency, (ii) a case where the specific player uses a certain item owned by the specific player, and (iii) a case where the specific player uses a certain qualification earned by completing a quest in the battle royale game.

For example, a simple menu may be provided on the graphic object related to the radio communication tool 400, and if the specific player selects a function of watching the CCTV, a mini-screen displaying the nearby area from the specific supply box may be provided or an alarm may be transmitted through the radio communication tool 400 in case another player enters into the nearby area from the specific supply box.

Next, when the specific supply box is acquired by the specific player, the processor 120 may perform a process of allowing a certain amount of in-game currency, owned by the specific player, to be paid as a transmission fee of the specific supply box.

Herein, the processor 120 performs a process of informing the specific player of information on the transmission fee of the specific supply box when the specific supply box corresponding to the specific player is being generated.

Herein, the transmission fee is determined by referring to at least one of (i) information on a cardinal number of the specific items included in the specific supply box, (ii) information on each of values corresponding to each of the specific items, and (iii) information on a value of the specific supply box.

For example, if the cardinal number of the specific items included in the specific supply box is larger or if a level of the specific supply box is higher, the transmission fee will be determined to be more expensive.

As described above, by allowing the transmission fee to be paid not at the moment when the specific supply box is generated but at the moment when the specific supply box is acquired by the specific player, following situation can be expected. That is, the specific player may not waste the in-game currency in one of (i) a case in which the specific player is killed in the beginning of the game, (ii) a case in which the specific player is likely to lose the game, and (iii) a case in which the specific player does not have to acquire the specific supply box because there is no difficulty in playing the game.

Meanwhile, depending on a game scenario, only the specific player may have a key to open the specific supply box or the specific supply box may be set up to be opened only with fingerprints of the specific player.

Next, the processor 120 may perform a process of allowing the transmission fee to be paid by the specific player at a moment the supply box is opened by the specific player, and, if the specific player is killed by another player while opening the supply box, the processor 120 performs (i) a process of displaying an acquisition user interface, on the user device 200 of said another player, which supports said another player to acquire the specific items included in the specific supply box or (ii) a process of displaying a destruction user interface, on the user device 200 of said another player, which supports said another player to destroy the specific supply box.

That is, the transmission fee is paid by the specific player at a moment the supply box tries to open the specific box, and if the specific player is killed by another player before acquiring the specific items included in the specific box, the processor 120 may allow said another player to either acquire the specific items included in the specific supply box that is opened or destroy the specific supply box.

Herein, if the said another player chooses to destroy the specific supply box without acquiring the specific items, a certain reward may be provided to the said another player.

Also, if none of attempt to open the specific supply box is performed by the specific player, the processor 120 may perform a process of displaying the destruction user interface, on the user device of said another player, which supports said another player to destroy the specific supply box.

That is, if other players find the specific supply box corresponding to the specific player, the processor 120 may allow said other players to destroy the specific supply box, and a certain reward may be provided to one of said other players who destroys the specific supply box.

Next, the processor 120 may perform a process of allowing the specific player to determine a level of the specific supply box, if the processor 120 detects at least one of (i) a case where the specific player uses in-game currency (ii) a case where the specific player uses a certain item owned by the specific player, and (iii) a case where the specific player uses a certain qualification earned by completing a quest in the battle royale game.

For example, as the amount of the in-game currency spent by the specific player increases, the level of the specific supply box may be increased to a Bronze level, a Silver level, a Gold level, a Crystal level, and the like.

Herein, the processor 120 may perform a process of setting at least part of (i) information on whether the specific supply box is occluded or not, and a period of time the specific supply box is being occluded, (ii) information on whether another player can attack the specific supply box or not, (iii) information on a defensive level of the specific supply box against an attack of said another player, (iv) information on a degrading level of the specific items in case the specific items included in the specific supply box are acquired by said another player, and (v) information on the specific distance from the location of the avatar 300, differently by referring to the level of the specific supply box.

Specifically, an example of setting (i) the information on whether the specific supply box is occluded or not, and the period of time the specific supply box is being occluded, differently per the level of the supply box, may be as follows. The supply box with the highest level may not be seen by the other game players at all or may be programmed to be hidden in the surroundings such as behind bushes or under the ground. And the supply box with the next highest level may be programmed to be hidden for 5 minutes immediately after being inserted into the game map and the supply box with the lowest level may be programmed not to be hidden at all.

Next, an example of setting (ii) the information on whether another player can attack the specific supply box or not, differently per the level of the supply box, may be as follows. The supply boxes with the highest level and the second highest level may be programmed to be seen by said another player but may be programmed not to be targeted for an attack, and the supply boxes with the rest of the levels may be programmed to be targeted by said another player for attacks.

Further, an example of setting (iii) the information on a defensive level of the specific supply box against an attack of another player, differently per the level of the supply box, may be as follows. The supply box with the highest level may be targeted by said another player for an attack, but may be programmed to lower 99% of the power of the attack, the supply box with the second highest level may be programmed to lower 70% of the power of the attack, and the supply box with the lowest level may be programmed to take full attack as it is.

Moreover, an example of setting (iv) the information on a degrading level of the specific items in case the specific items included in the specific supply box are acquired by another player, differently per the level of the supply box, may be as follows. If said another player acquires the specific items included in the supply box with the highest level and uses the specific items, a performance level of the specific items may be degraded by 50%. If said another player acquires the specific items included in the supply box with the second highest level and uses the specific items, the performance level of the specific items may be degraded by 20%, and for the specific items included in the supply box with the lowest highest level, the performance level of the specific items may be 100%.

Next, an example of setting (v) the information on the specific distance from the location of the avatar 300, differently per the level of the supply box may be as follows. That is, the area where the supply box with the highest level can be placed may be set within a distance of 1 m from the location of the avatar 300. And the area, where the supply box with the second highest level can be placed, may be set within a distance of 5 m from the location of the avatar 300, and the area where the supply box with the lowest level can be placed may be set as the area within the furthest distance possible that are set by default.

Next, the game players may include a first player and a second player, and a first supply box may correspond to the first player and a second supply box may correspond to the second player.

Herein, the processor 120 may perform (i) a process of activating a first user interface to the first player, which supports a control of the first supply box for a predetermined period of time right after the first specific supply box is provided and (ii) a process of activating a second user interface to the second player, which supports a control of the second supply box for the predetermined period of time right after the second specific supply box is provided.

That is, even if the specific time each of the first specific supply box and the second specific supply box to be provided is determined differently, a probability of the supply box to be found and used by an owner who has generated the supply box may be increased by allowing the only owner of the supply box to utilize their supply box for a predetermined period of time right after each supply box is provided.

The present disclosure has an effect of allowing the game players to select an item for use in the battle royale game and generate a customized supply box containing the item therein.

The present disclosure has another effect of providing the supply box to the game player at the random time and to transmit the notification which includes information on the specific location of the supply box to be provided through a radio communication tool.

The present disclosure has still another effect of allowing a certain amount of in-game currency, owned by the game player, to be paid as a transmission fee of the supply box, when the supply box is acquired by the game player.

The embodiments of the present disclosure as explained above can be implemented in a form of executable program command through a variety of computer means recordable in computer readable media. The computer readable media may include solely or in combination, program commands, data files, and data structures. The program commands recorded in the media may be components specially designed for the present disclosure or may be usable to those skilled in the art in a field of computer software. Computer readable media may include magnetic media such as hard disk, floppy disk, and magnetic tape, optical media such as CD-ROM and DVD, magnetooptical media such as floptical disk and hardware devices such as ROM, RAM, and flash memory specially designed to store and carry out program commands. Program commands may include not only a machine language code made by a complier but also a high-level code that can be used by an interpreter etc., which may be executable by a computer. The aforementioned hardware device can work as more than a software module to perform the action of the present disclosure and they can do the same in the opposite case.

As seen above, the present disclosure has been explained by specific matters such as detailed components, limited embodiments, and drawings. They have been provided only to help more general understanding of the present disclosure. It, however, will be understood by those skilled in the art that various changes and modification may be made from the description without departing from the spirit and scope of the disclosure as defined in the following claims.

Accordingly, the thought of the present disclosure must not be confined to the explained embodiments, and the following patent claims as well as everything including variations equal or equivalent to the patent claims pertain to the category of the thought of the present disclosure.

## Claims

1. A method for providing a battle royale game in which supply boxes are provided at a random time, wherein the battle royale game is a game in which a plurality of game players compete for survival in a specific area, wherein a first state of the battle royale game represents a state in which the game players log into the battle royale game but do not play the battle royale game and wherein a second state of the battle royale game represents a state in which the game players play the battle royale game, comprising steps of:
(a) a game server performing one of (i) a process of allowing a specific player in the first state among the game players to select one or more specific items among (i-1) one or more personal items owned by the specific player and (i-2) one or more shared items and (ii) a process of allowing the specific items to be selected by using a first algorithm;
(b) if information on the specific items is acquired, the game server performing a process of generating a specific supply box, corresponding to the specific player, which includes the specific items; and
(c) if the specific player enters the second state, the game server performing a process of providing the specific supply box by referring to information on a location of an avatar of the specific player on a specific map, at a specific time determined randomly by using a second algorithm, and a process of allowing the specific player to play the battle royal game by using the specific supply box that is provided.

2. The method of Claim 1, wherein, if metadata on the location of the avatar is acquired, the game server performs a process of determining information on a specific location of the specific supply box to be provided on the specific map as specific coordinates which represent one of (i) coordinates corresponding to the location of the avatar and (ii) coordinates, within a specific distance from the location of the avatar, determined using a third algorithm, acquired by referring to the metadata.

3. The method of Claim 2, wherein the game server performs a process of allowing the specific player to adjust the specific distance, if the game server detects at least one of (i) a case where the specific player uses in-game currency, (ii) a case where the specific player uses a certain item owned by the specific player, and (iii) a case where the specific player uses a certain qualification earned by completing a quest in the battle royale game.

4. The method of Claim 1, wherein, if the specific supply box is determined to be provided to the specific player, the game server performs a process of providing a radio communication tool to the specific player, and if the specific supply box is provided at the specific time, the game server performs a process of transmitting a first notification which includes information on a specific location of the specific supply box to be provided on the specific map to the specific player through the radio communication tool.

5. The method of Claim 4, wherein the game server performs a process of providing a graphic object related to the radio communication tool on a display of a user device of the specific player, and
wherein the game server, (i) before the specific time, performs a process of displaying a reception sensitivity of the graphic object related to the radio communication tool as smaller than a predetermined degree of sensitivity, and after the specific time, performs a process of displaying the reception sensitivity of the graphic object related to the radio communication tool as greater than the predetermined degree of sensitivity or (ii) before the specific time, performs a process of not displaying the graphic object related to the radio communication tool, and after the specific time, performs a process of displaying the graphic object related to the radio communication tool.

6. The method of Claim 4, wherein, in case that the specific supply box is being attacked by another player, the game server performs a process of transmitting a second notification which includes information that the specific supply box is being attacked by said another player.

7. The method of Claim 4, wherein the game server performs a process of allowing the specific player to add a function of a closed-circuit television (CCTV) capable of monitoring nearby area of the specific supply box, if the game server detects at least one of (i) a case where the specific player uses in-game currency, (ii) a case where the specific player uses a certain item owned by the specific player, and (iii) a case where the specific player uses a certain qualification earned by completing a quest in the battle royale game.

8. The method of Claim 1, wherein, when the specific supply box is acquired by the specific player, the game server performs a process of allowing a certain amount of in-game currency, owned by the specific player, to be paid as a transmission fee of the specific supply box.

9. The method of Claim 8, wherein the game server performs a process of informing the specific player of information on the transmission fee of the specific supply box when the specific supply box corresponding to the specific player is being generated, and
wherein the transmission fee is determined by referring to at least one of (i) information on a cardinal number of the specific items included in the specific supply box, (ii) information on each of values corresponding to each of the specific items, and (iii) information on a value of the specific supply box.

10. The method of Claim 8, wherein the game server performs a process of allowing the transmission fee to be paid by the specific player at a moment the supply box is opened by the specific player, and
wherein, if the specific player is killed by another player while opening the supply box, the game server performs (i) a process of displaying an acquisition user interface, on a user device of said another player, which supports said another player to acquire the specific items included in the specific supply box, or (ii) a process of displaying a destruction user interface, on the user device of said another player, which supports said another player to destroy the specific supply box, and
wherein, if none of attempt to open the specific supply box is performed by the specific player, the game server performs a process of displaying the destruction user interface, on the user device of said another player, which supports said another player to destroy the specific supply box.

11. The method of Claim 1, wherein the game server performs a process of allowing the specific player to determine a level of the specific supply box, if the game server detects at least one of (i) a case where the specific player uses in-game currency, (ii) a case where the specific player uses a certain item owned by the specific player, and (iii) a case where the specific player uses a certain qualification earned by completing a quest in the battle royale game, and
wherein the game server performs a process of setting at least part of (i) information on whether the specific supply box is occluded or not, and a period of time the specific supply box is being occluded, (ii) information on whether another player can attack the specific supply box or not, (iii) information on a defensive level of the specific supply box against an attack of said another player, (iv) information on a degrading level of the specific items in case the specific items included in the specific supply box are acquired by said another player, and (v) information on the specific distance from the location of the avatar, differently by referring to the level of the specific supply box.

12. The method of Claim 1, wherein, in case the game players include a first player and a second player and that a first supply box corresponds to the first player and a second supply box corresponds to the second player, the game server performs (i) a process of activating a first user interface to the first player, which supports a control of the first supply box for a predetermined period of time right after the first specific supply box is provided and (ii) a process of activating a second user interface to the second player, which supports a control of the second supply box for the predetermined period of time right after the second specific supply box is provided.

13. A game server providing a battle royale game in which supply boxes are provided at a random time, wherein the battle royale game is a game in which a plurality of game players compete for survival in a specific area, wherein a first state of the battle royale game represents a state in which the game players log into the battle royale game but do not play the battle royale game and wherein a second state of the battle royale game represents a state in which the game players play the battle royale game, comprising:
a communication part; and
a processor for performing (I) one of (i) a process of allowing a specific player in the first state among the game players to select one or more specific items among (i-1) one or more personal items owned by the specific player and (i-2) one or more shared items and (ii) a process of allowing the specific items to be selected by using a first algorithm, (II) if information on the specific items is acquired, a process of generating a specific supply box, corresponding to the specific player, which includes the specific items, and (III) if the specific player enters the second state, a process of providing the specific supply box by referring to information on a location of an avatar of the specific player on a specific map, at a specific time determined randomly by using a second algorithm, and a process of allowing the specific player to play the battle royal game by using the specific supply box that is provided.

14. The game server of Claim 13, wherein, if metadata on the location of the avatar is acquired, the processor performs a process of determining information on a specific location of the specific supply box to be provided on the specific map as specific coordinates which represent one of (i) coordinates corresponding to the location of the avatar and (ii) coordinates, within a specific distance from the location of the avatar, determined using a third algorithm, acquired by referring to the metadata.

15. The game server of Claim 14, wherein the processor performs a process of allowing the specific player to adjust the specific distance, if the processor detects at least one of (i) a case where the specific player uses in-game currency, (ii) a case where the specific player uses a certain item owned by the specific player, and (iii) a case where the specific player uses a certain qualification earned by completing a quest in the battle royale game.

16. The game server of Claim 13, wherein, if the specific supply box is determined to be provided to the specific player, the processor performs a process of providing a radio communication tool to the specific player and if the specific supply box is provided at the specific time, the processor performs a process of transmitting a first notification which includes information on a specific location of the specific supply box to be provided on the specific map to the specific player through the radio communication tool.

17. The game server of Claim 16, wherein the processor performs a process of providing a graphic object related to the radio communication tool on a display of a user device of the specific player, and
wherein the processor, (i) before the specific time, performs a process of displaying a reception sensitivity of the graphic object related to the radio communication tool as smaller than a predetermined degree of sensitivity, and after the specific time, performs a process of displaying the reception sensitivity of the graphic object related to the radio communication tool as greater than the predetermined degree of sensitivity, or (ii) before the specific time, performs a process of not displaying the graphic object related to the radio communication tool, and after the specific time, performs a process of displaying the graphic object related to the radio communication.

18. The game server of Claim 16, wherein, in case that the specific supply box is being attacked by another player, the processor performs a process of transmitting a second notification which includes information that the specific supply box is being attacked by said another player.

19. The game server of Claim 16, wherein the processor performs a process of allowing the specific player to add a function of a closed-circuit television (CCTV) capable of monitoring nearby area of the specific supply box, if the processor detects at least one of (i) a case where the specific player uses in-game currency, (ii) a case where the specific player uses a certain item owned by the specific player, and (iii) a case where the specific player uses a certain qualification earned by completing a quest in the battle royale game.

20. The game server of Claim 13, wherein, when the specific supply box is acquired by the specific player, the processor performs a process of allowing a certain amount of in-game currency, owned by the specific player, to be paid as a transmission fee of the specific supply box.

21. The game server of Claim 20, wherein the processor performs a process of informing the specific player of information on the transmission fee of the specific supply box when the specific supply box corresponding to the specific player is being generated, and
wherein the transmission fee is determined by referring to at least one of (i) information on a cardinal number of the specific items included in the specific supply box, (ii) information on each of values corresponding to each of the specific items and (iii) information on a value of the specific supply box.

22. The game server of Claim 20, wherein the processor performs a process of allowing the transmission fee to be paid by the specific player at a moment the supply box is opened by the specific player, and
wherein, if the specific player is killed by another player while opening the supply box, the processor performs (i) a process of displaying an acquisition user interface, on a user device of said another player, which supports said another player to acquire the specific items included in the specific supply box, or (ii) a process of displaying a destruction user interface, on the user device of said another player, which supports said another player to destroy the specific supply box, and
wherein, if none of attempt to open the specific supply box is performed by the specific player, the processor performs a process of displaying the destruction user interface, on the user device of said another player, which supports said another player to destroy the specific supply box.

23. The game server of Claim 13, wherein the processor performs a process of allowing the specific player to determine a level of the specific supply box, if the processor detects at least one of (i) a case where the specific player uses in-game currency, (ii) a case where the specific player uses a certain item owned by the specific player, and (iii) a case where the specific player uses a certain qualification earned by completing a quest in the battle royale game, and
wherein the processor performs a process of setting at least part of (i) information on whether the specific supply box is occluded or not, and a period of time the specific supply box is being occluded, (ii) information on whether another player can attack the specific supply box or not, (iii) information on a defensive level of the specific supply box against an attack of said another player, (iv) information on a degrading level of the specific items in case the specific items included in the specific supply box are acquired by said another player, and (v) information on the specific distance from the location of the avatar, differently by referring to the level of the specific supply box.

24. The game server of Claim 13, wherein, in case the game players include a first player and a second player and that a first supply box corresponds to the first player and a second supply box corresponds to the second player, the processor performs (i) a process of activating a first user interface to the first player, which supports a control of the first supply box for a predetermined period of time right after the first specific supply box is provided and (ii) a process of activating a second user interface to the second player, which supports a control of the second supply box for the predetermined period of time right after the second specific supply box is provided.
